# EUROPÄISCHE PATENTSCHRIFT

(11) **EP 3 207 839 B1**
(45) Veröffentlichungstag und Bekanntmachung des Hinweises auf die Patenterteilung: **19.12.2018**
(21) Anmeldenummer: 17156314.1
(22) Anmeldetag: 15.02.2017
(51) Int. Cl.: A47J 31/44

(54) **HEISSGETRÄNKEZUBEREITUNGSVORRICHTUNG MIT VERRIEGELUNGSELEMENTEN**
DEVICE FOR PREPARING HOT BEVERAGES WITH LOCKING ELEMENTS
APPAREIL POUR LA PRÉPARATION DE BOISSONS CHAUDES AVEC ÉLÉMENTS DE BLOCAGE

(30) Priorität: 19.02.2016 DE 102016202630
(43) Veröffentlichungstag der Anmeldung: 23.08.2017
(73) Patentinhaber: BSH Hausgeräte GmbH, 81739 München (DE)
(72) Erfinder: Höglauer, Michael, 83246 Unterwössen (DE); Jäger, Harald, 83349 Palling (DE); Koch, Franz, 83454 Anger (DE); Steffl, Michael, 83250 Marquartstein (DE)

(56) Entgegenhaltungen:
- EP-A1- 2 946 703
- WO-A1-2016/016191
- DE-A1-102012 214 940
- US-A1- 2013 025 465

## Beschreibung

Die Erfindung betrifft eine Heißgetränkezubereitungsvorrichtung, insbesondere einen Kaffeevollautomaten für Haushaltszwecke, mit welchem insbesondere Heißgetränke oder heiße flüssige Lebensmittel, wie beispielsweise Kaffee, Tee, heiße Milch, Kakaogetränke oder auch Suppen zubereitet werden können. Nachfolgend werden die Begriffe "Heißgetränkezubereitungsvorrichtung" und "Zubereitungsvorrichtung" gleichbedeutend benutzt, so dass einer dieser Begriffe stets den anderen beinhaltet und sie daher gegeneinander austauschbar sind.
Bei Kaffeevollautomaten kann es notwendig sein, Elemente im Inneren des jeweiligen Kaffeevollautomaten zu entnehmen und z. B. zu reinigen. Die DE 10 2010 023 668 A1 zeigt eine Einrichtung zur Erfassung der Entnahme der Tropfschale und des Tresterbehälters bei einer Kaffeemaschine. Die US 2013 0025 465 beschreibt eine Zubereitungseinrichtung mit einer Anzahl an Verriegelungselementen für entnehmbare Funktionselemente.

Eine weitere Heißgetränkezubereitungsvorrichtung ist aus EP-A-2946703 bekannt. Aufgabe der vorliegenden Erfindung ist es, eine verbesserte Überwachung der Betriebsvoraussetzungen bei Heißgetränkezubereitungsvorrichtungen zu ermöglichen. Diese Aufgabe wird erfindungsgemäß durch eine Heißgetränkezubereitungsvorrichtung mit den Merkmalen des unabhängigen Patentanspruchs 1 gelöst. Demgemäß umfasst eine Heißgetränkezubereitungsvorrichtung, insbesondere ein Kaffeevollautomat, ein Gehäuse mit einem beweglichen und insbesondere schwenkbaren Abdeckelement, z. B. eine Servicetüre, welches eine Serviceposition, also z. B. eine geöffnete Position, und eine Betriebsposition, also z. B. eine geschlossene Position, aufweist und in der Serviceposition den Zugriff auf eine Serviceöffnung in dem Gehäuse freigibt und den Zugriff in der Betriebsposition blockiert. Ferner ist eine Anzahl, also eines oder mehrere, von drehbeweglich gelagerten Verriegelungselementen vorgesehen, welche zumindest eine entriegelte Position und eine verriegelte Position aufweisen. Mindestens ein Verriegelungselement weist ferner eine Blockadeposition auf. Die Verriegelungselemente sind dazu ausgebildet, in der Blockadeposition eine Bewegung des Abdeckelements in die Betriebsposition zu verhindern, in der entriegelten Position einen Eingriff des Abdeckelements zu ermöglichen und in der verriegelten Position das Abdeckelement mit einer vorgegebenen Kraft an das Gehäuse heran zu ziehen. Schließlich ist ein aus dem Gehäuse entnehmbares Funktionselement vorgesehen, z. B. eine Auffangschale für Flüssigkeiten und Tresterpulver, welches durch die Serviceöffnung hindurch entnehmbar ist und beim Einsetzen in das Gehäuse, insbesondere bei geöffnetem Abdeckelement, diejenigen Verriegelungselemente, welche die Blockadeposition aufweisen, in die entriegelte Position bewegt.

Die Heißgetränkezubereitungsvorrichtung kann beispielsweise ein Kapselautomat, eine Kaffeepadmaschine oder ein Kaffeevollautomat mit einer Mahl- und Brüheinrichtung sein. Bei dem Abdeckelement kann es sich um so gut wie jede benutzerseitig bedienbare Öffnung in einer beliebigen Außenwand des Gehäuses handeln, also beispielsweise um eine Gerätetür an einer Gerätefront oder in einer Geräteseitenwand. Analog kann das entnehmbare Funktionselement jedes von einem Benutzer aus dem Gehäuse der Heißgetränkezubereitungsvorrichtung entnehmbare Element sein, wie z. B. eine Auffangschale und/oder eine Brüheinheit. Die Betriebsposition bezeichnet eine Position des Abdeckelements, in welcher die Heißgetränkezubereitungsvorrichtung betriebsbereit ist, also z. B. ein Getränkebezug möglich ist. Handelt ist sich bei dem beweglichen Element z. B. um eine Servicetüre, befindet sich die Servicetüre in der Betriebsposition, wenn sie geschlossen ist. Die Serviceposition bezeichnet dagegen eine Position des Abdeckelements, in welcher kein Getränkebezug möglich ist und das Gehäuse z. B. zum Reinigen der Heißgetränkezubereitungsvorrichtung geöffnet ist.

Es ist regelmäßig notwendig, zu Reinigungs- oder Servicezwecken Funktionselemente, wie z. B. eine Brüheinheit oder eine Auffangschale, aus dem Kaffeevollautomat zu entnehmen. Für den Betrieb des Kaffeevollautomaten muss jedoch sichergestellt sein, dass die Funktionselemente korrekt eingesetzt sind. Fehlt ein Funktionselement, soll der Betrieb des Kaffeevollautomaten blockiert sein. Außerdem soll das Gehäuse des Kaffeevollautomaten v.a. im geschlossenen Zustand trotz fertigungsbedingter Toleranzen ein ansprechendes Bild abgeben. Es sollen also z. B. die Spaltmaße zwischen dem Gehäuse und einer Türe gleichbleibend groß sein. Die Erfindung stellt dementsprechend eine Heißgetränkezubereitungsvorrichtung bereit, bei der die Verriegelungselemente eine Doppelfunktion ausfüllen, nämlich nicht nur ein Öffnen und Schließen des Abdeckelements ermöglichen, sondern das Abdeckelement in der Betriebsposition mit einer vorgegebenen Kraft an das Gehäuse ziehen und so die gewünschten Spaltmaße einstellen. Gleichzeitig verhindert mindestens eines der Verriegelungselemente auch ein Schließen bzw. Bewegen in die Betriebsposition des Abdeckelements, wenn das Funktionselement nicht in das Gehäuse eingesetzt ist und sich das jeweilige Verriegelungselement sich somit in der Blockadeposition befindet. Fehlt also das Funktionselement, kann das Abdeckelement nicht in die Betriebsposition gebracht werden, da dessen Bewegung durch die Verriegelungselemente blockiert wird.

Diese sehr einfache mechanische Konstruktion kann folglich sowohl eine Art Schutzfunktion erfüllen, als auch Fertigungstoleranzen des Gehäuses der Heißgetränkezubereitungsvorrichtung ausgleichen, indem es das Abdeckelement mit einer vorgegebenen Kraft an das Gehäuse heran zieht.

Weitere, besonders vorteilhafte Ausgestaltungen und Weiterbildungen der Erfindung ergeben sich aus den abhängigen Ansprüchen sowie der nachfolgenden Beschreibung, wobei die Merkmale verschiedener Ausführungsbeispiele zu neuen Ausführungsbeispielen kombiniert werden können.

Lässt sich das Funktionselement von einer Geräteaußenseite aus und durch eine gemeinsame Gehäuseöffnung hindurch betätigen, braucht das Abdeckelement die gemeinsame Gehäuseöffnung nur teilweise zu verschließen, nämlich jenen Abschnitt nicht zwingend, den das eingesetzte Funktionselement einnimmt bzw. für seine Betätigung erfordert und ggf. selbst abdeckt. Bei einer zusätzlichen Gehäuseöffnung für das Funktionselement dagegen bedeckt das Abdeckelement seine eigene Gehäuseöffnung vollständig. Damit kann sichergestellt sein, dass das Funktionselement unabhängig von der Betätigung des Abdeckelements bedienbar ist.

Die Positionen des Abdeckelements, also die Service- und die Betriebsposition, werden regelmäßig zusätzlich sensorisch überwacht, beispielsweise mittels eines Microschalters. Gleiches kann auch für das Funktionselement gelten, dessen An- oder Abwesenheit erfasst werden kann. Um einen Sensor einzusparen, und dennoch sowohl das Abdeckelement als auch ein insbesondere von einer Geräteaußenseite aus bedienbares Funktionselement zu überwachen, können sie alternativ untereinander mechanisch gekoppelt sein, so dass sich insbesondere das Funktionselement nicht betätigen lässt, solange sich das Abdeckelement in seiner Betriebsposition befindet. Eine derartige mechanische Koppelung des Funktionselements an die Position des Abdeckelements kann in einem einfachen Fall beispielsweise darin bestehen, dass die Elemente eine Gehäuseöffnung gemeinsam bedecken und der Umriss des Funktionselements größer dimensioniert ist als derjenige Abschnitt der Gehäuseöffnung, den es abdeckt. Bedeckt also in der Betriebsposition das Abdeckelement das Funktionselement teilweise oder abschnittsweise, ist dessen Bedienung von der Position des Abdeckelements abhängig. Bedeckt es das Funktionselement vollständig, lässt sich jenes ohnehin nicht mehr selbständig oder unabhängig von einer Geräteaußenseite bedienen.

Nur diejenigen Verriegelungselemente, die sich in der Blockadeposition befinden, verhindern ein Bewegen des Abdeckelements in die Betriebsposition. Folglich müssen auch nur diese Elemente beim Einsetzen des Funktionselements in die entriegelte Position bewegt werden. In einer Ausführungsform kann daher jeweils ein Hebelelement an denjenigen Verriegelungselementen vorgesehen sein, welche die Blockadeposition aufweisen, wobei das Funktionselement ausgebildet ist, beim Einsetzen in das Gehäuse die Hebelelemente derart zu betätigen, dass die entsprechenden Verriegelungselemente in die entriegelte Position bewegt werden. Ist das Funktionselement als Auffangschale ausgebildet, wird dieses bei geöffnetem Abdeckelement üblicherweise entlang eines meist linearen Betätigungswegs aus dem Gehäuse entnommen bzw. in dieses eingeführt. Die Hebelelemente können folglich einfach in dem Betätigungsweg angebracht werden, welchen das Funktionselement beim Einsetzen in das Gehäuse zurücklegt. Das Funktionselement drückt dann bei der Einsetzbewegung die Hebel entlang seiner Bewegungsrichtung und damit die entsprechenden Verriegelungselemente in die entriegelte Position, in welcher das Abdeckelement in diese eingreifen kann.

In einer vorteilhaften Ausführungsform kann für jedes Verriegelungselement jeweils ein bistabiles Federelement mit zwei Vorspannrichtungen vorgesehen sein, wobei das Federelement in der ersten Vorspannrichtung das jeweilige Verriegelungselement in Richtung der verriegelten Position und in einer zweiten Vorspannrichtung in Richtung der entriegelten Position vorspannt. Ferner liegt die Blockadeposition in Richtung der entriegelten Position nach der entriegelten Position. Die verriegelte Position, die entriegelte Position und die Blockadeposition liegen also in dieser Reihenfolge nacheinander in Uhrzeigerrichtung. Verriegelungselemente mit der Blockadeposition werden also nicht nur bis zur entriegelten Position sondern bis zur Blockadeposition vorgespannt. Auf Grund des Federelements ist eine äußere Kraft notwendig, um die Verriegelungselemente von der entriegelten Position in die verriegelte Position zu bewegen oder umgekehrt. Die Verriegelungselemente halten folglich selbständig die entriegelte Position oder die verriegelte Position. Insbesondere wird in der verriegelten Position dadurch auch das Abdeckelement auf das Gehäuse hin gezogen.

In einer weiteren vorteilhaften Ausführungsform liegt der Umkehrpunkt des bistabilen Federelements zwischen der entriegelten Position und der verriegelten Position des jeweiligen Verriegelungselements. Wird bei einer Bewegung des jeweiligen Verriegelungselements der Umkehrpunkt des Federelements erreicht, kehrt sich die Richtung also um, in welche das Federelement eine Kraft auf das Verriegelungselement ausübt. Dies führt zu einer Art Schnapp-Effekt, durch den das Verriegelungselement aktiv in die entriegelte Position bzw. die verriegelte Position geführt wird. Die Verriegelungselemente können also nicht an einer undefinierten Position stehen bleiben.

In einer weiteren vorteilhaften Ausführungsform kann an jedem der Verriegelungselemente ein Fortsatz bzw. Stift vorgesehen sein, der außerhalb der Drehachse des jeweiligen Verriegelungselements angebracht ist. Ferner kann für jedes der Verriegelungselemente jeweils ein entsprechendes Eingriffselement an dem Abdeckelement vorgesehen sein, wobei die Eingriffselemente jeweils eine Ausnehmung oder Kulisse aufweisen, in welche der entsprechende Fortsatz beim Bewegen des Abdeckelements in die Betriebsposition eingreift, wenn sich das jeweilige Verriegelungselement in der entriegelten Position befindet. Die Schwenkbewegung des Abdeckelements kann an dem von dem Schwenkgelenk entfernten Ende des Abdeckelements als annähernd lineare Bewegung angesehen werden. Durch die Eingriffselemente und die Fortsätze kann diese lineare Bewegung mit einer sehr einfachen mechanischen Konstruktion in eine Rotation des jeweiligen Verriegelungselements umgesetzt werden.

In einer weiteren vorteilhaften Ausführungsform kann für jedes derjenigen Verriegelungselemente, welche die Blockadeposition aufweisen, ein Anschlag vorgesehen sein, der die Drehbewegung des jeweiligen Verriegelungselements über die Blockadeposition hinaus blockiert. Die Kontur der Ausnehmungen kann ferner jeweils eine erste Führungsfläche aufweisen, welche beim Bewegen des Abdeckelements in die Betriebsposition über den jeweiligen Fortsatz das entsprechende Verriegelungselement gegen den Anschlag drückt, wenn sich das entsprechende Verriegelungselement in der Blockadeposition befindet. Der Anschlag verhindert folglich eine weitere Drehbewegung des jeweiligen Verriegelungselements. Zugleich entsteht eine Wirkungskette von dem Abdeckelement über das Verriegelungselement bis zu dem Anschlag. Folglich wird durch den Anschlag auch die weitere Bewegung des Abdeckelements in die Betriebsposition blockiert.

In einer weiteren vorteilhaften Ausführungsform kann die Kontur der Ausnehmungen jeweils eine zweite Führungsfläche aufweisen, welche beim Bewegen des Abdeckelements in die Betriebsposition über den jeweiligen Fortsatz das entsprechende Verriegelungselement in Richtung der verriegelten Position bewegt, wenn sich das entsprechende Verriegelungselement in der entriegelten Position befindet. Wie oben bereits erläutert, spannen die Federelemente die Verriegelungselemente in Richtung der entriegelten Position vor. Beim Schließen des Abdeckelements werden durch die zweiten Führungsflächen und die jeweiligen Fortsätze folglich die Verriegelungselemente aus der entriegelten Position in Richtung der verriegelten Position bewegt.

In einer weiteren vorteilhaften Ausführungsform kann die Kontur der Ausnehmungen jeweils einen Mitnehmerbereich aufweisen, welcher den Fortsatz hält, wenn beim Bewegen des Abdeckelements in die Betriebsposition bei Erreichen des Umkehrpunkts des Federelements das jeweilige Verriegelungselement von dem Federelement in die verriegelte Position bewegt wird. Bei Erreichen des Umkehrpunkts wird das Verriegelungselement aktiv durch die Feder in die verriegelte Position bewegt. Folglich wird durch den Mitnehmerbereich das Abdeckelement gemeinsam mit dem Verriegelungselement durch die Feder bewegt. Die Kraft, welche die Feder auf das Verriegelungselement ausübt, hält auch das Abdeckelement in der Betriebsposition. Zum Bewegen des Abdeckelements in die Serviceposition muss diese Kraft folglich z. B. durch einen Benutzer überwunden werden. Zieht der Benutzer z. B. an dem Abdeckelement, wird die Zugkraft über die oben bereits erwähnte Wirkungskette von dem Abdeckelement über das Verriegelungselement übertragen und wirkt der Federkraft entgegen bis der Umkehrpunkt des Federelements erreicht ist.

Im Betrieb stehen Elemente im Inneren der Heißgetränkezubereitungsvorrichtung unter Druck oder enthalten heiße Flüssigkeiten. Daher darf z. B. ein Einleiten eines Getränkebezugs bei geöffnetem Gehäuse nicht möglich sein. Bei Heißgetränkezubereitungsvorrichtungen ist es daher wünschenswert, ein Öffnen des Gehäuses der Heißgetränkezubereitungsvorrichtung zu erkennen. Daher kann in einer weiteren vorteilhaften Ausführungsform mindestens ein Schaltelement vorgesehen sein, welches an einem der Verriegelungselemente derart angeordnet ist, dass es von dem Abdeckelement in der Betriebsposition betätigt und in der Serviceposition nicht betätigt wird. Mit Hilfe des Schaltelements, welches an einem der Verriegelungselemente angebracht wird, kann zusätzlich zur mechanischen Arretierung des Abdeckelements eine einfache Überwachung des Gehäuses der Heißgetränkezubereitungsvorrichtung durchgeführt werden. Da das Abdeckelement nicht in die Betriebsposition gebracht werden kann, wenn das entnehmbare Funktionselement nicht in dem Gehäuse sitzt, ist sichergestellt, dass bei betätigtem Schaltelement sowohl das Funktionselement in der korrekten Position sitzt, als auch, dass sich das Abdeckelement in der Betriebsposition befindet.

Nach einer weiteren vorteilhaften Ausgestaltung der Erfindung kann am Funktionselement ein abstehender Betätiger wie eine Lippe oder ein Riegel oder Stößel angebracht sein, der bei der Entnahme des Funktionselements aus dem Gehäuse das Verriegelungselement, das bzw. wenn es sich in seiner verriegelten Position befindet, durch Anlaufen des Betätigers am Hebelelement in die entriegelte Position bewegt. Das Verriegelungselement könnte nämlich etwa durch unsachgemäßen Gebrauch bzw. ungewollt in die verriegelte Position verbracht worden sein, ohne dass sich das Abdeckelement in seiner Betriebsposition befindet. Erfindungsgemäß kann dann das Verriegelungselement durch Entnahme des eingesetzten Funktionselements zurück gestellt werden, so dass das Abdeckelement aus seiner Serviceposition in seine Betriebsposition versetzt werden und das Heißgetränkegerät in Betrieb genommen werden kann.

Eine derartige Fehbedienung kann ungünstigenfalls bei entnommenem Funktionselement geschehen. Nach einer weiteren vorteilhaften Ausgestaltung der Erfindung kann der Betätiger daher federnd ausgebildet sein, so dass er bei einem Einschieben des Funktionselements in die Gehäuseöffnung am Fortsatz des Verriegelungselements in verriegelter Position anläuft, ausweicht und zurückfedernd in seiner Bewegungsrichtung betrachtet hinter den Fortsatz greift. Er kann horizontal oder vertikal, jedenfalls orthogonal zu seiner Bewegungsrichtung federnd ausgebildet sein und darf nur beim Einsetzen des Funktionselements einfedern. In der entgegengesetzten Bewegungsrichtung des Funktionselements dagegen greift der Betätiger am Fortsatz an, sodass er bei einer Entnahme des Funktionselements das Verriegelungselement in die entriegelte Position bewegt. Damit kann der Benutzer, der das Verriegelungselement zum Beispiel durch eine Fehlbedienung in die verriegelte Position gebracht hat, das Heißgetränkegerät selbst und ohne Zuhilfenahme von Werkzeug selbst bei zugleich entnommenem Funktionselement betriebsfähig machen, indem er das Funktionselement ein-setzt und wieder entnimmt. Denn danach befindet sich das Verriegelungselement wieder in der entriegelten Position. So kann das Heißgetränkegerät selbst nach einer mutwilligen Fehlbedienung wieder in Betriebsbereitschaft versetzt werden, womit es auch insoweit der DIN 60335 genügt und seine Risikokosten (TCR) verringert.

Das Prinzip der Erfindung wird im Folgenden unter Hinweis auf die beigefügten Figuren beispielshalber noch näher erläutert. Dabei sind in den verschiedenen Figuren gleiche Komponenten mit identischen Bezugsziffern versehen. Es zeigen:
- Figur 1:: eine perspektivische Ansicht einer ersten Ausführungsform einer erfindungsgemäßen Heißgetränkezubereitungsvorrichtung;
- Figur 2:: eine Seitenansicht der ersten Ausführungsform der Figur 1 bei geöffnetem Abdeckelement und entnommener Auffangschale;
- Figur 3:: eine weitere Seitenansicht der ersten Ausführungsform bei geöffnetem Abdeckelement und eingesetzter Auffangschale;
- Figur 4:: eine weitere Seitenansicht der ersten Ausführungsform bei teilweise geschlossenem Abdeckelement und eingesetzter Auffangschale;
- Figur 5:: eine weitere Seitenansicht der ersten Ausführungsform bei geschlossenem Abdeckelement und eingesetzter Auffangschale;
- Figur 6:: eine Seitenansicht einer zweiten Ausführungsform der erfindungsgemäßen Heißgetränkezubereitungseinrichtung mit einem Verriegelungselement in Blockadeposition;
- Figur 7:: das Verriegelungselement der zweiten Ausführungsform der Figur 6 in einer entriegelten Position;
- Figur 8:: das Verriegelungselement der zweiten Ausführungsform in einer verriegelten Position bei geschlossenem Abdeckelement und eingesetzter Auffangschale;
- Figur 9:: das Verriegelungselement der zweiten Ausführungsform in einer verriegelten Position bei offenem Abdeckelement und entnommener Auffangschale;
- Figur 10:: das Verriegelungselement der zweiten Ausführungsform in einer verriegelten Position vor Einsetzen der Auffangschale; und
- Figur 11:: das Verriegelungselement der zweiten Ausführungsform in einer verriegelten Position nach Einsetzen der Auffangschale.

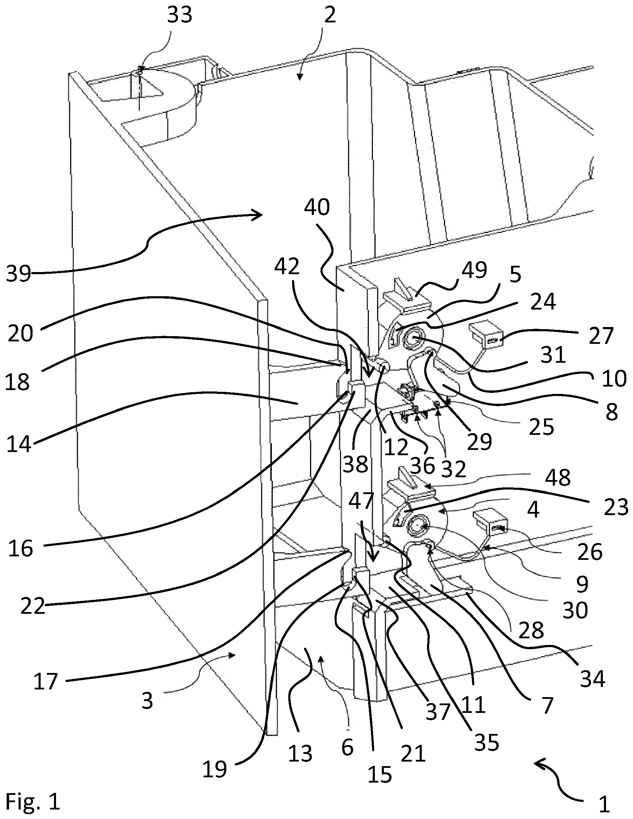

Die nur ausschnittsweise dargestellte Heißgetränkezubereitungsvorrichtung 1 der Figur 1 weist ein Gehäuse 2 auf, in welchem eine Serviceöffnung 39 angebracht ist, die einen Zugriff auf Elemente im Inneren des Gehäuses ermöglicht. Die Serviceöffnung 39 kann mit einem flächig ausgebildeten Abdeckelement 3 abgedeckt bzw. mit einer Gerätetür verschlossen werden, wenn ein Getränkebezug stattfinden soll. Dazu ist das Abdeckelement 3 über das Gelenk 33 schwenkbeweglich mit dem Gehäuse 2 gekoppelt. Am Boden des Gehäuses 2 befindet sich eine Auffangschale 6, die durch die Serviceöffnung 39 entnommen und eingesetzt werden kann, wenn das Abdeckelement 3 geöffnet ist.

An derjenigen Seite des Abdeckelements 3, welche dem Gelenk 33 gegenüberliegt, weist das Abdeckelement 3 zwei in der Höhe voneinander beabstandete Eingriffselemente oder Türhaken 13, 14 auf. Das Gehäuse 2 weist einen entsprechenden Abschnitt auf, der als Gegenlager 40 für das Abdeckelement 3 dient, wenn dieses geschlossen ist. Das Gegenlager 40 liegt parallel zu dem Abdeckelement 3 im geschlossenen Zustand und weist zwei Öffnungen 41, 42 auf Höhe der Türhaken 13, 14 auf, durch jene beim Schließen des Abdeckelements 3 in das Gehäuse 2 fahren.

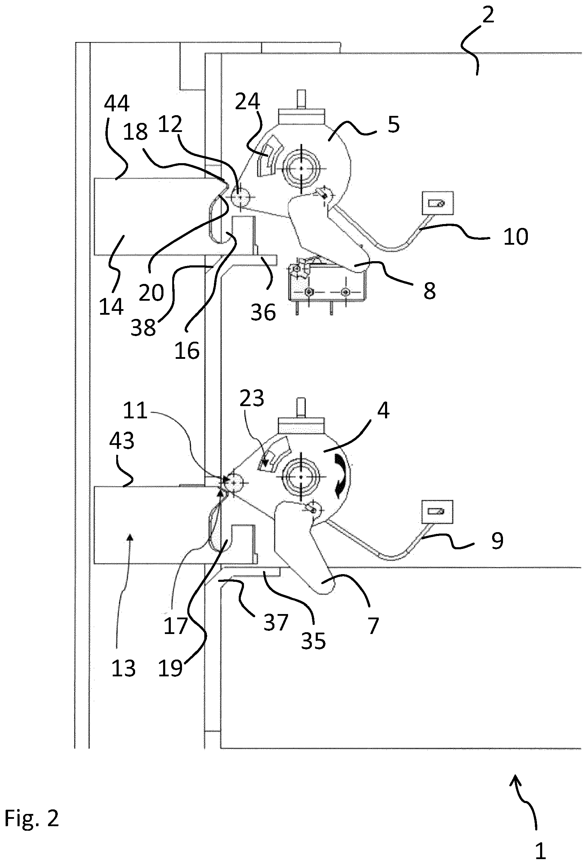

Im Inneren des Gehäuses 3 hinter dem Gegenlager 40 ist für jeden der Türhaken 13, 14 ein Verriegelungselement 4, 5 angeordnet. Die Verriegelungselemente 4, 5 sind jeweils drehbeweglich auf einem Führungsstift 30, 31 gelagert und weisen in einer achsparallelen Aufsicht eine in etwa tropfenförmige Außenkontur auf. Der radial äußerste Rand der Tropfenform liegt in etwa in Richtung der jeweiligen Öffnung 41, 42 und trägt einen Stift oder Fortsatz 11, 12, der orthogonal aus dem jeweiligen Verriegelungselement 4, 5, also parallel zu dessen Drehachse hervorsteht. Das untere Verriegelungselement 4 befindet sich in einer Blockadeposition, während sich das obere Verriegelungselements 5 dagegen in der entriegelten Position befindet. Der Unterschied zwischen der Blockadeposition und der entriegelten Position wird in Bezug zu Figur 2 näher erläutert.

Jedes der Verriegelungselemente 4, 5 wird über ein Federelement 9, 10 vorgespannt. Die Federelemente 9, 10 werden von einem Lager 26, 27 am Gehäuse und einem exzentrisch an dem jeweiligen Verriegelungselement 4, 5 angebrachten Lager 28, 29 eingefasst. Die exzentrische Anordnung der Lager 28, 29 führt dazu, dass die Federelemente 9, 10 das jeweilige Verriegelungselement 4, 5 sowohl im Uhrzeigersinn als auch gegen den Uhrzeigersinn vorspannen (siehe Figuren 2 bis 5) können. Liegt die Kraft, welche das Federelement 9, 10 ausübt, auf einer Geraden zwischen dem Führungsstift 30 bzw. 31 und dem jeweiligen Lager 26, 27, befindet sich das jeweilige Federelement 9, 10 an seinem Null- oder Umkehrpunkt und damit in einem labilen Gleichgeweicht. Dort erzeugt das Federelement 9, 10 kein Drehmoment auf das Verriegelungselement 4, 5. Wird ein Verriegelungselement 4, 5 im Uhrzeigersinn oder gegen den Uhrzeigersinn über den Umkehrpunkt hinaus bewegt, unterstützt das jeweilige Federelement 9, 10 diese Bewegung durch seine Federkraft und bewegt das Verriegelungselement 4, 5 ohne weitere äußere Krafteinwirkung weiter. Dieser Zusammenhang wird in den Figuren 2 bis 5 näher erläutert. In Figur 1 drückt das Federelement 9 das Verriegelungselement 4 in die Blockadeposition. Das Federelement 10 drückt das Verriegelungselement 4 in die entriegelte Position.

Die Verriegelungselemente 4, 5 weisen ferner jeweils ein Hebelelement 7, 8 auf, welches aber lediglich bei dem unteren Verriegelungselement 4 funktional notwendig ist. Bei dem Verriegelungselement 5 kann das Hebelelement 8 z. B. zur Umsetzung einer Gleichteilstrategie und des damit verbundenen reduzierten Verwaltungsaufwands vorgesehen sein. In einer Ausführungsform kann das Hebelelement 8 aber auch weggelassen werden). Die Hebelelemente 7, 8 erstrecken sich von den Verriegelungselementen 3, 4 radial nach außen und zeigen in Figur 1 nach unten. Die exzentrische Kopplung der Hebelelemente 7, 8 mit dem jeweiligen Verriegelungselement 3, 4 führt folglich dazu, dass die Hebelelemente 7, 8 schwenkbar um den jeweiligen Führungsstift 30, 31 gelagert sind.

Bei dem Verriegelungselement 4 dient das Hebelelement 7 beim Einsetzen der Auffangschale 6 dazu, die Bewegung der Auffangschale 6 auf das Verriegelungselement 4 zu übertragen und dieses dadurch in die entriegelte Position zu bewegen. Dazu steht seitlich an der Auffangschale 6 eine waagrecht verlaufende Rippe 34 horizontal ab, welche beim Einsetzen der Auffangschale 6 entlang ihres geradlinigen Einschubwegs auf das Hebelelement 7 eine Kraft entlang ihres Einschubwegs ausübt. Auf Grund der drehbeweglichen Lagerung des Verriegelungselements 4 und damit auch des Hebelelements 7 wird dabei die lineare Bewegung der Auffangschale 6 in eine Schwenkbewegung des Hebelelements 7 bzw. eine Drehbewegung des Verriegelungselements 4 überführt.

Schließlich ist unter dem Verriegelungselement 5 ein Schalter 25 angeordnet, der mittels zweier Stifte 32 an dem Gehäuse 2 befestigt ist. Der Schalter 25 ist dabei derart positioniert, dass er beim Schließen des Abdeckelements 3 durch den Türhaken 14 betätigt wird. Der Schalter 25 kann z. B. mit der Energieversorgung elektrischer Verbraucher in dem Gehäuse 2 oder mit einer Steuereinrichtung der Heißgetränkezubereitungsvorrichtung 1 gekoppelt sein. Über den Schalter 25 kann folglich elektrisch ausgewertet werden, ob das Abdeckelement 3 geschlossen ist oder nicht.

In den Figuren 2 bis 5 sind der Übersichtlichkeit halber lediglich diejenigen Bezugszeichen dargestellt, die zur Erklärung des jeweiligen Erfindungsmerkmals notwendig sind.

In der Seitenansicht der Heißgetränkezubereitungsvorrichtung 1 der Figur 2 befindet sich das untere Verriegelungselement 4 in der Blockadeposition. Das Federelement 9 drückt dabei das Verriegelungselement 4 gegen den Anschlag 23, der eine weitere Drehung des Verriegelungselements 4 in Uhrzeigerrichtung blockiert. Der Türhaken 13 weist an seinem dem Verriegelungselement 4 zugewandten Ende eine Ausnehmung 15 auf, die an ihrer Stirnseite eine erste Führungsfläche 17 aufweist, deren Flächennormale schräg nach oben in etwa in Richtung des Verriegelungselements 4 gemäß Figur 2 zeigt. Das vordere untere Ende der Führungsfläche 17 befindet sich unterhalb des Mittelpunkts des im axialen Querschnitt kreisrunden Fortsatzes 11. Wird das Abdeckelement 3 und damit der Türhaken 13 auf das Verriegelungselement 4 zubewegt, berührt die Führungsfläche 17 den Fortsatz 11 also unterhalb seines Mittelpunkts und drückt diesen nach oben. Dadurch wird auf das Verriegelungselement 4 eine Kraft im Uhrzeigersinn ausgeübt. Eine Bewegung des Verriegelungselements 4 wird in dieser Richtung aber durch den Anschlag 23 verhindert. Folglich kann auch der Türhaken 13 nicht weiter in das Gehäuse 2 einfahren. Alternativ kann die Führungsfläche 17 orthogonal zur Bewegung des Türhakens 13 stehen, also senkrecht. In diesem Fall muss aber die Gerade aus dem Mittelpunkt des Fortsatzes 11 und der Drehachse bzw. dem Führungsstift 30 des Verriegelungselements 4 parallel zur Schließbewegung des Abdeckelements 3 liegen.

Wie oben bereits erwähnt, wird beim Einsetzen der Auffangschale 6 das Verriegelungselement 4 in die entriegelte Position bewegt. Der Fortsatz 11 dient also in der Blockadeposition dazu, ein Schließen des Abdeckelements 3 dann zu verhindern, wenn die Auffangschale 6 in das Gehäuse 2 nicht eingesetzt ist.

Da das Verriegelungselement 5 über dem Verriegelungselement 4 sitzt, kann dieses beim Einsetzen der Auffangschale 6 nicht betätigt bzw. bewegt werden. Folglich könnte das Verriegelungselement 5 nicht aus der Blockadeposition in die entriegelte Position bewegt werden. Aus diesem Grund wird das Verriegelungselement 5 von dem Anschlag 24 bereits in der entriegelten Position gehalten bzw. in seiner Bewegung begrenzt. Die ihm zugeordnete Ausnehmung 16 weist ferner eine zweite Führungsfläche 20 auf, deren Flächennormale schräg nach unten in das Innere des Gehäuses 2 zeigt und deren oberes Ende über dem Mittelpunkt des Fortsatzes 12 liegt.

Wird der Türhaken 14 weiter in das Gehäuse 2 bewegt, gleitet der Fortsatz 12 an der Führungsfläche 20 entlang und wird nach unten gedrückt. Diese Bewegung des Fortsatzes 12 wird auf Grund seiner drehbeweglichen Aufhängung in eine Drehbewegung des Verriegelungselements 5 entgegen dem Uhrzeigersinn übertragen. Blockiert das Verriegelungselement 4 die Bewegung des Abdeckelements 3 nicht, kann folglich der Türhaken 14 in das Gehäuse 2 einfahren und schleppt dabei das Verriegelungselement 5 über den Fortsatz 12 mit.

Das Gegenlager 40 weist schließlich an den unteren Enden der Öffnungen 41, 42 (Figur 1) jeweils eine waagrecht verlaufende Rippe 35, 36 auf. Die Rippen 35, 36 gehen jeweils über geneigte Anlaufschrägen 37, 38 in das Gegenlager 40 über und erstrecken sich parallel zur Bewegungsrichtung der Türhaken 13, 14 beim Schließen des Abdeckelements 3. Die Anlaufschrägen 37, 38 heben die Türhaken 13, 14 und damit das gesamte Abdeckelement 3 beim Schließen des Abdeckelements 4 in die durch die Rippen 35, 36 vorgegebene Höhe.

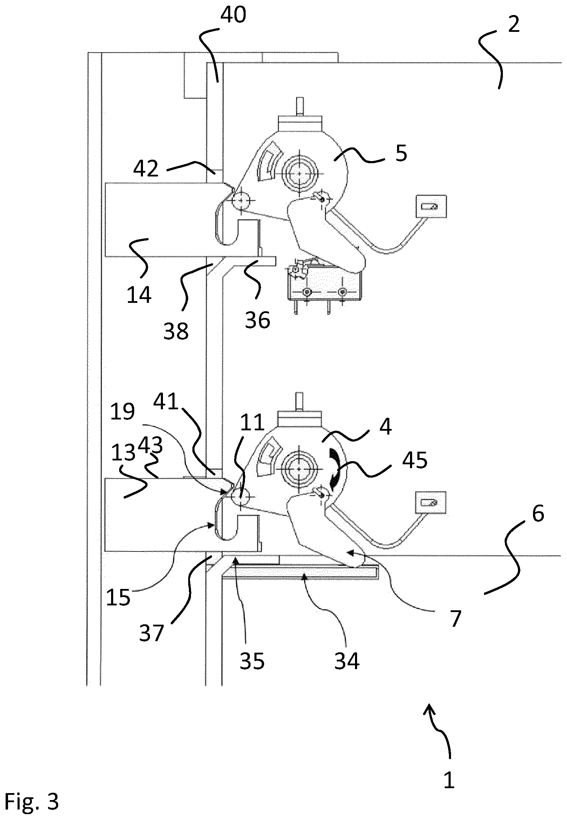

Die Figur 3 zeigt die Situation der Figur 2, allerdings mit eingesetzter Auffangschale 6. Die Rippe 34, die von der Auffangschale 6 ab-, also aus der Bildebene heraussteht, hat sich unter das Hebelelement 7 geschoben und es dabei nach oben gedrückt. Die Bewegung des Hebelelements 7 wurde auf Grund seiner drehbeweglichen Aufhängung in eine Drehung des Verriegelungselements 4 entgegen dem Uhrzeigersinn umgewandelt. Durch die Drehung wird das Verriegelungselement 4 von der Blockadeposition in die entriegelte Position bewegt bzw. gedreht.

In dieser Position kann nun analog zu dem oberen Verriegelungselement 5 und dem oberen Türhaken 14 (siehe oben), der Türhaken 13 in das Gehäuse 2 einfahren. Der Mittelpunkt des Fortsatzes 11 liegt dabei unter dem oberen Ende der zweiten Führungsfläche 19. Der Fortsatz 11 wird folglich durch die Führungsfläche 19 nach unten gedrückt, wenn der Türhaken 13 in das Gehäuse 2 bewegt wird, und bewegt den Fortsatz 11 und damit das Verriegelungselement 4 dadurch entgegen dem Uhrzeigersinn.

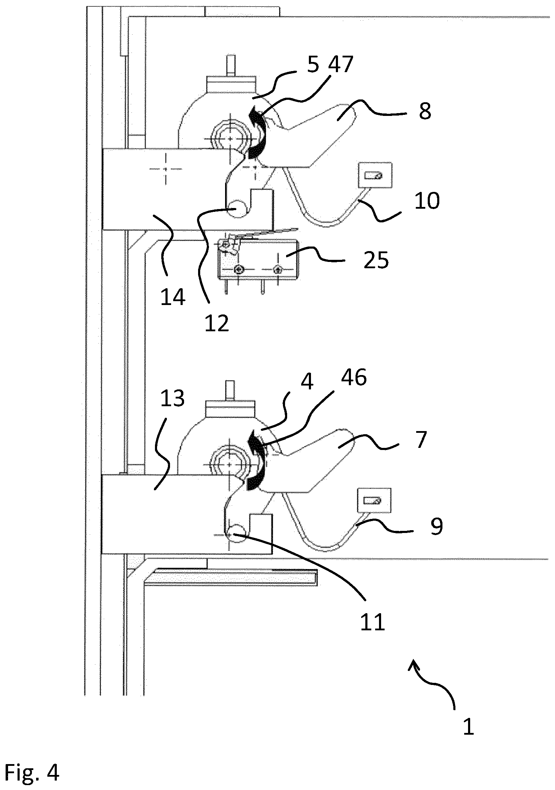

Wird die Bewegung fortgesetzt, erreichen die Verriegelungselemente 4, 5 die in Figur 4 gezeigte Stellung, in der die Federelemente 9, 10 jeweils ihre Umkehrpunkt überschritten haben. Bisher haben die Federelemente 9, 10 beim Einschieben der Türhaken 13, 14 eine Kraft bzw. ein Drehmoment 45 entgegen der Drehrichtung, also im Uhrzeigesinn bewirkt. Ab dem Umkehrpunkt bewirken die Federelemente 9, 10 beim Einschieben der Türhaken 13, 14 eine Kraft bzw. ein Drehmoment 46, 47 in der Drehrichtung, also entgegen dem Uhrzeigersinn. Die Türhaken 13, 14 werden durch die Fortsätze 11, 12 also aktiv in das Gehäuse 2 gezogen.

Spätestens in der in Fig. 4 gezeigten Position wird auch das Schaltelement 25 durch den Türhaken 14 betätigt. Das Betätigen des Schaltelements 25 kann elektrisch ausgewertet werden. Basierend auf dem Signal des Schaltelements 25 kann folglich z. B. ein Getränkebezug freigegeben oder blockiert werden.

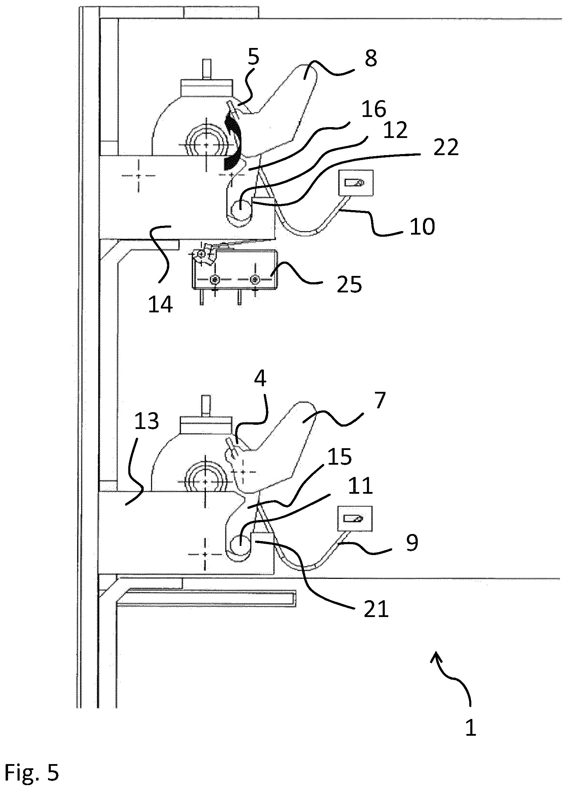

Figur 5 zeigt die Verriegelungselemente 4, 5 in der verriegelten Position. Jetzt sind die Verriegelungselemente 4, 5 maximal entgegen dem Uhrzeigersinn verdreht. Die Fortsätze 11, 12 liegen dabei jeweils an dem Mitnehmerbereich 21, 22 der Ausnehmungen 15, 16 an und halten dadurch die Türhaken 13, 14 und das Abdeckelement 3 in Position.

Das Abdeckelement 3 wird folglich auf Grund der durch die Federelemente 9, 10 ausgeübten Kraft aktiv in der geschlossenen Position gehalten. Zum Halten des Abdeckelements 3 wird also keine separate Verriegelung benötigt, die beim Öffnen per Hand entriegelt werden müsste. Das Abdeckelement 3 kann also z. B. einfach an einem Griff bzw. einer Griffmulde aufgezogen werden.

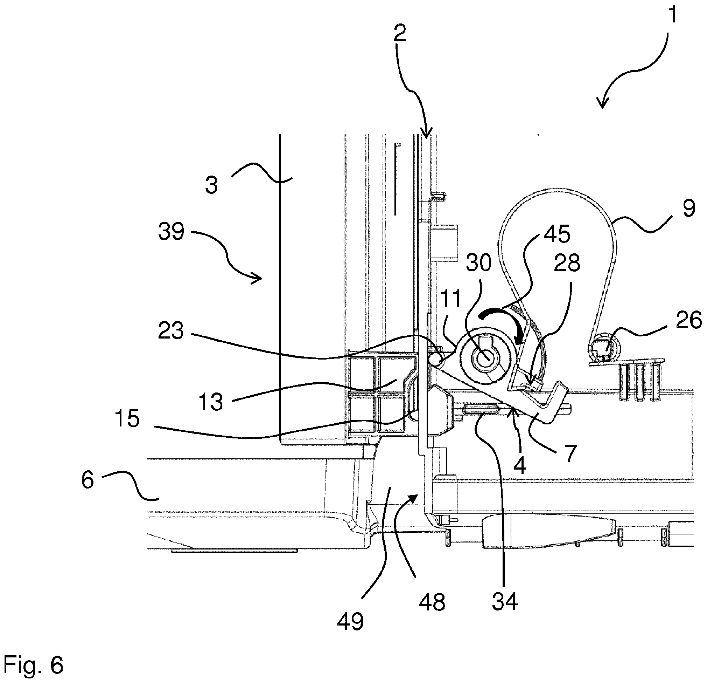

Die Figuren 6 bis 11 zeigen eine zweite Ausführungsform der Erfindung, die weitgehend die gleiche Funktionalität bietet. Sie kommt allerdings mit nur einem Verriegelungselement 4 aus und umfasst einen zusätzlichen Effekt. Funktional übereinstimmende Bestandteile sind der Einfachheit halber mit denselben Bezugszeichen versehen wie in den Figuren 1 bis 5. Um unnötige Wiederholungen zu vermeiden, wird wegen der übereinstimmenden Funktionen auf die Beschreibung zu den Figuren 1 bis 5 verwiesen.

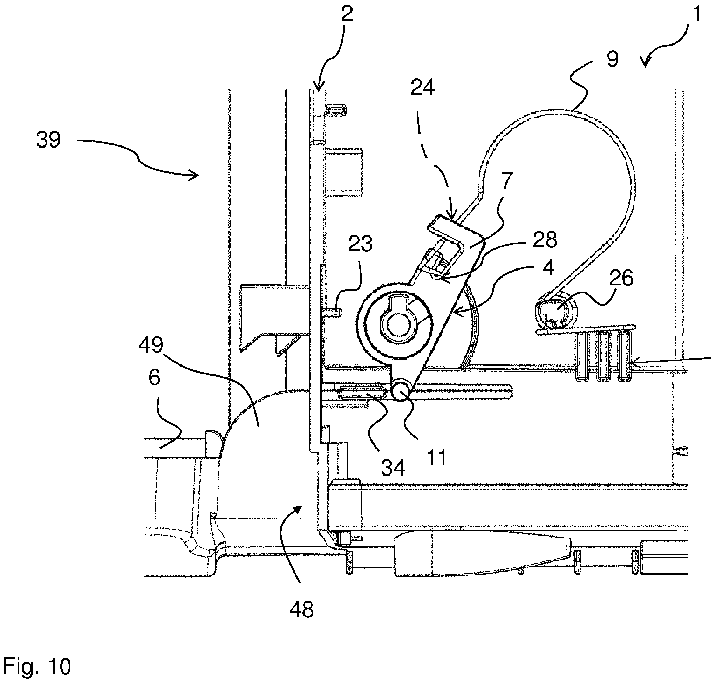

Figur 6 zeigt eine Teilschnittansicht der Heißgetränkezubereitungsvorrichtung 1 durch ein Gehäuse 2 mit einer Serviceöffnung 39, die ein schwenkbeweglich gelagertes Abdeckelement 3 abgedeckt. Das Abdeckelement 3 verschließt die Serviceöffnung 39 nicht vollständig, sondern lässt einen bodennahen Abschnitt 48 frei. Am Boden des Gehäuses 2 befindet sich eine Restwasser-, Tropf- oder Auffangschale 6 als Funktionselement. Sie kann ebenfalls durch die Serviceöffnung 39, nämlich durch deren bodennahen Abschnitt 48 entnommen und eingesetzt werden. Wegen eines von der Auffangschale 6 nach oben abstehenden Riegels 49 (s. auch Figur 10) aber nur, wenn das Abdeckelement 3 geöffnet ist. In Figur 6 ist die Auffangschale 6 nicht vollständig in das Gehäuse 2 eingesetzt.

An einer dem Betrachter zugewandten Öffnungsseite des Abdeckelements 3 weist es einen teilweise verdeckten Türhaken 13 als Eingriffselement auf. Der Türhaken 13 ist an einem unteren Rand des Abdeckelements 3 und damit in räumlicher Nähe zur Auffangschale 6 angeordnet.

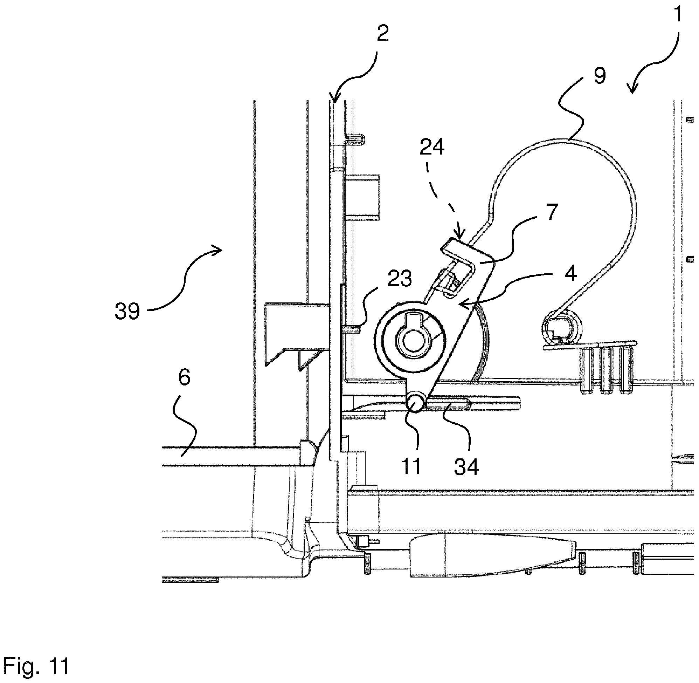

Im Inneren des Gehäuses 2 ist ein den Figuren 1 bis 5 prinzipiell und funktional vergleichbares drehbeweglich gelagertes Verriegelungselement 4 mit eine Führungsstift 30, einem Fortsatz 11, einem Hebelelement 7 und einem Lager 28 für eine Feder 9 angebracht, deren weiteres Lager 26 am Gehäuse 2 liegt. Liegt die Kraft, welche das Federelement 9 ausübt, auf einer Geraden zwischen dem Führungsstift 30 und dem Lager 26, befindet sich das Federelement 9 an seinem Null- oder Umkehrpunkt und damit in einem labilen Gleichgewicht. Dort erzeugt das Federelement 9 kein Drehmoment auf das Verriegelungselement 4. Das Verriegelungselement 4 der Figur 6 befindet sich in seiner Blockadeposition, in der die Feder 9 mit dem Drehmoment 45 das Verriegelungselement 4 im Uhrzeigersinn bis zu einem ersten Anschlag 23 am Gehäuse beaufschlagt. In der Gegenrichtung wirkt das Drehmoment 46 maximal bis zu einem verdeckten zweiten Anschlag 24 (s. Figuren 10 und 11) am Verriegelungselement 4 selbst.

Beim Einsetzen der Auffangschale 6 wirkt das Hebelelement 7 in der oben beschriebenen Weise auf das Verriegelungselement 4, so dass dieses in die entriegelte Position gelangt. Abweichend gegenüber der ersten Ausführungsform steht die als Betätiger ausgebildete Rippe 34 seitlich von dem an der Auffangschale 6 angebrachten Riegel 42 ab und ist an ihm in Blickrichtung federnd gelagert.

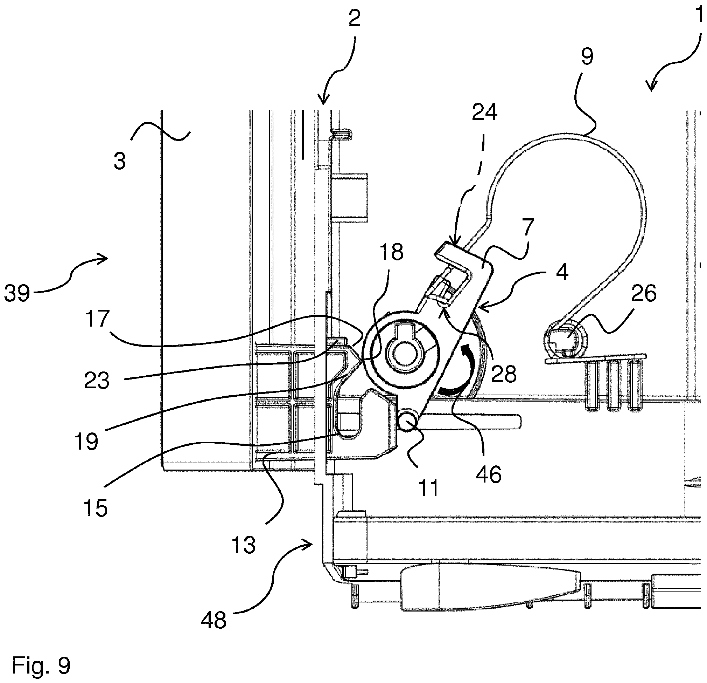

Der Türhaken 13 ist im Wesentlichen gleich geformt wie in der ersten Ausführungsform. Er weist ebenfalls die sackförmige Ausnehmung 15, eine erste Führungsfläche 17 und eine zweite Führungsfläche 19 mit einer dazwischen liegenden Nase 18 auf (deutlicher in Figur 9) und wirkt wie oben beschrieben mit dem Verriegelungselement 4 zusammen.

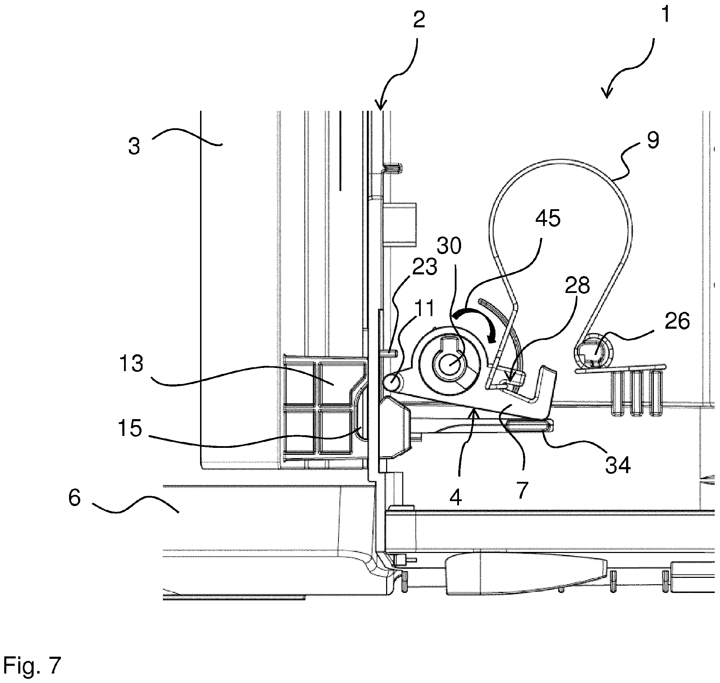

Figur 7 zeigt die entriegelte Position des Verriegelungselements 4, die beim Einsetzen der Auffangschale 6 durch Anlaufen des Betätigers 34 am Hebelelement 7 entsteht und derjenigen gemäß Figur 2 entspricht. Folglich kann der Türhaken 13 in das Gehäuse 2 einfahren und schleppt dabei das Verriegelungselement 4 über den Fortsatz 11 mit, bis jener vollständig in die Ausnehmung 15 eingefahren ist, dort einen Anschlag zur Begrenzung seiner Drehbewegung entgegen dem Uhrzeigersinn findet, das Abdeckelement 3 in seiner Betriebsposition die Gehäuseöffnung 39 vollständig verschließt und am Gehäuse 2 ansteht.

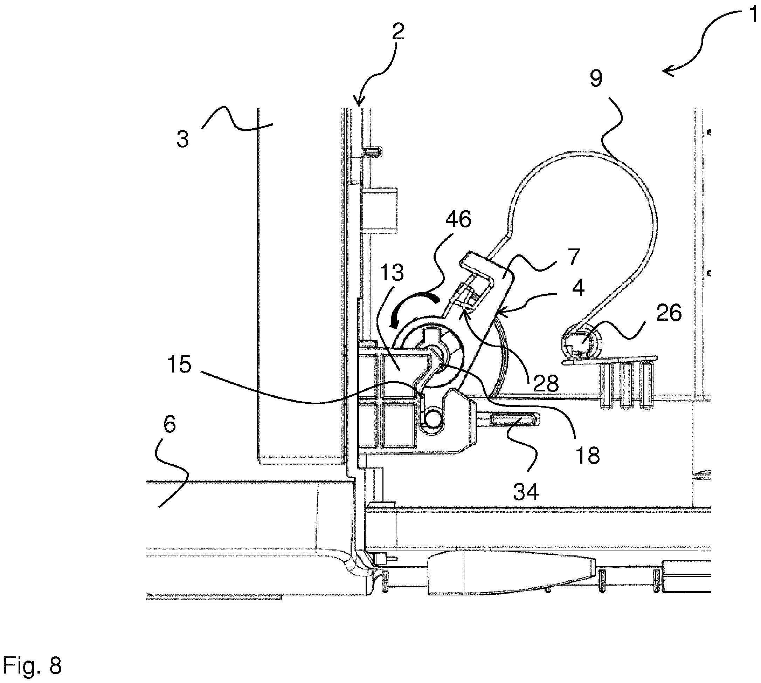

Diesen Zustand zeigt Figur 8. Der Türhaken 13 bzw. das Abdeckelement 3 werden durch den Fortsatz 11 - wie oben zu Figur 3 beschrieben - aktiv in das Gehäuse 2 hinein bzw. auf das Gehäuse 2 hin gezogen.

Spätestens in der in Fig. 8 gezeigten Position kann ein nicht dargestelltes Schaltelement betätigt werden. Das Betätigen des Schaltelements kann die Einnahme der Betriebsposition des Abdeckelements 3 und die Anwesenheit der mit ihr über den Riegel 42 gekoppelte Auffangschale 6 signalisieren und elektrisch ausgewertet werden. Darauf basierend kann z. B. ein Getränkebezug freigegeben oder blockiert werden.

Es ist nicht auszuschließen, dass das Verriegelungselement 4 bei Servicetätigkeiten des Benutzers wie zum Beispiel bei einem Reinigen des Heißgetränkegeräts versehentlich in seine verriegelte Position verbracht wird, ohne dass es in den Türhaken 13 eingreift (vgl. Figur 9). Es liegt dann am Anschlag 24 an, befindet sich also in einem stabilen Gleichgewicht, verhindert aber ein Schließen des Abdeckelements 3. Drückt der Benutzer auf das Abdeckelement 3, leitet der Türhaken 13 die Kraft auf den Fortsatz 11 weiter, womit das Verriegelungselement 4 lediglich gegen den Anschlag 24 drückt und seine verriegelte Position unverändert aufrecht erhält. Ohne genaue Kenntnis der Konstruktion und Funktionsweise des Verriegelungselements 4 bietet sich dem Benutzer mangels Eingriffs des Türhakens 13 zunächst keine Angriffsmöglichkeit zur Verstellung des Verriegelungselements 4 in seine entriegelte Position.

In dieser Situation kann der Benutzer das Heißgetränkegerät ohne jegliches zusätzliches Werkzeug selbst wieder betriebsbereit machen, indem er die Auffangschale 6 in das Gehäuse 2 einsetzt. Dabei läuft die Rippe 34 an der Auffangschale 6 zunächst am Fortsatz 11 des Verriegelungselements 4 an (s. Figur 10), der ihr einen Widerstand entgegen der Einsetzrichtung der Auffangschale 6 bietet. Weil die Rippe 34 federnd gelagert ist, kann sie dem Fortsatz 11 in Blickrichtung der Figur 10 nach hinten in Richtung Geräteinnenraum ausweichen, in der Einsetzrichtung am Verriegelungselement 4 entlang gleiten und sich hinter dem Fortsatz 11 wieder entspannen (vgl. Figur 11). Die Rippe 34 greift jetzt hinter den Fortsatz 11. Zieht der Benutzer nun die Auffangschale 6 wieder aus dem Gehäuse 2 heraus, so bietet der Fortsatz 11 mangels Anlage an einem Anschlag oder dergleichen der Rippe 34 keinen Widerstand mehr, so dass jene nicht einfedert, sondern das Verriegelungselement 4 in Uhrzeigerrichtung in seine entriegelte Position verdreht. Damit kann das Abdeckelement 3 nach Einsetzen der Auffangschale 6 und beim Schließen mit dem Türhaken 13 in das Verriegelungselement 4 eingreifen und das Gehäuse 2 in seiner bestimmungsgemäßen Betriebsposition verschließen.

Da es sich bei den vorhergehend detailliert beschriebenen Heißgetränkezubereitungsvorrichtungen um Ausführungsbeispiele handelt, können sie in üblicher Weise vom Fachmann in einem weiten Umfang modifiziert werden, ohne den Bereich der Erfindung zu verlassen. Insbesondere kann z. B. lediglich ein einzelnes Verriegelungselement vorgesehen sein, welches die Funktionen der zwei oben erläuterten Verriegelungselemente in sich vereint. Beispielsweise können zwei funktionale Verriegelungselemente mit Blockadeposition genutzt werden, um das Vorhandensein z. B. einer Auffangschale und zugleicheiner Brüheinheit zu überwachen. Die Brüheinheit weist dann ebenso, wie die oben beschriebene Auffangschale, eine Rippe oder einen anderen Betätiger für den entsprechenden Hebel auf. Alternativ kann die Brüheinheit über einen Hebel verriegelt werden, der bei fehlender Brüheinheit das Schließen des Abdeckelements blockiert. Außerdem schließt die Verwendung der unbestimmten Artikel "ein" bzw. "eine" nicht aus, dass die betreffenden Merkmale auch mehrmals oder mehrfach vorhanden sein können.

### Bezugszeichenliste

- 1: Heißgetränkezubereitungsvorrichtung
- 2: Gehäuse
- 3: Abdeckelement
- 4, 5: Verriegelungselement
- 6: Funktionselement
- 7, 8: Hebelelement
- 9, 10: Federelement
- 11, 12: Fortsatz
- 13, 14: Eingriffselement
- 15, 16: Ausnehmung
- 17, 18: Führungsfläche
- 19, 20: Führungsfläche
- 21, 22: Mitnehmerbereich
- 23, 24: Anschlag
- 25: Schalter
- 26, 27: Lager
- 28, 29: Lager
- 30, 31: Führungsstift
- 32: Stifte
- 33: Gelenk
- 34: Rippe
- 35, 36: Rippe
- 37, 38: Anlaufschräge
- 39: Serviceöffnung
- 40: Gegenlager
- 41, 42: Öffnungen
- 43, 44: Oberkannte
- 45, 46, 47: Drehmoment
- 48: bodennaher Abschnitt
- 49: Riegel

## Patentansprüche

1. Heißgetränkezubereitungsvorrichtung (1), insbesondere Kaffeevollautomat,
- mit einem Gehäuse (2), welches ein bewegliches Abdeckelement (3) aufweist, welches eine Serviceposition und eine Betriebsposition aufweist und in der Serviceposition den Zugriff auf eine Serviceöffnung (39) in dem Gehäuse (2) freigibt und den Zugriff in der Betriebsposition blockiert,
- mit einer Anzahl von beweglich gelagerten Verriegelungselementen (4, 5), welche zumindest eine entriegelte Position und eine verriegelte Position aufweisen, wobei mindestens ein Verriegelungselement (4, 5) ferner eine Blockadeposition aufweist und wobei die Verriegelungselemente (4, 5) ausgebildet sind, in der Blockadeposition eine Bewegung des Abdeckelements (3) in die Betriebsposition zu verhindern, in der entriegelten Position einen Eingriff des Abdeckelements (3) zu ermöglichen und in der verriegelten Position das Abdeckelement (3) mit einer vorgegebenen Kraft an das Gehäuse (2) heran zu ziehen,
- mit einem durch die Serviceöffnung (39) hindurch aus dem Gehäuse (2) entnehmbaren Funktionselement (6), welches beim Einsetzen in das Gehäuse (2) diejenigen Verriegelungselemente (4, 5), welche die Blockadeposition aufweisen, in die entriegelte Position bewegt.

2. Heißgetränkezubereitungsvorrichtung (1) nach Anspruch 1, mit jeweils einem Hebelelement (7, 8) zumindest an denjenigen Verriegelungselementen (4, 5), welche die Blockadeposition aufweisen, wobei das Funktionselement (6) ausgebildet ist, beim Einsetzen in das Gehäuse (2) die Hebelelemente (7, 8) derart zu betätigen, dass die entsprechenden Verriegelungselemente (4, 5) in die entriegelte Position bewegt werden.

3. Heißgetränkezubereitungsvorrichtung (1) nach einem der vorherigen Ansprüche, mit jeweils einem bistabilen Federelement (9, 10) mit zwei Vorspannrichtungen für jedes Verriegelungselement (4, 5), wobei das Federelement (9, 10) in der ersten Vorspannrichtung das jeweilige Verriegelungselement (4, 5) in Richtung der verriegelten Position und in einer zweiten Vorspannrichtung in Richtung der entriegelten Position vorspannt, wobei die Blockadeposition in Richtung der entriegelten Position nach der entriegelten Position liegt.

4. Heißgetränkezubereitungsvorrichtung (1) nach Anspruch 3, wobei der Umkehrpunkt des bistabilen Federelements (9, 10) zwischen der entriegelten Position und der verriegelten Position des jeweiligen Verriegelungselements (4, 5) liegt.

5. Heißgetränkezubereitungsvorrichtung (1) nach einem der vorherigen Ansprüche, mit einem Fortsatz (11, 12) an jedem der Verriegelungselemente (4, 5) und jeweils einem entsprechenden Eingriffselement (13, 14) an dem Abdeckelement (3) für jedes der Verriegelungselemente (4, 5), wobei die Eingriffselemente (13, 14) jeweils eine Ausnehmung (15, 16) aufweisen, in welche der entsprechende Fortsatz (11, 12) beim Bewegen des Abdeckelements (3) in die Betriebsposition eingreift, wenn sich das jeweilige Verriegelungselement (4, 5) in der entriegelten Position befindet.

6. Heißgetränkezubereitungsvorrichtung (1) nach Anspruch 5, mit einem Anschlag (23, 24) für jedes derjenigen Verriegelungselemente (4, 5), welche die Blockadeposition aufweisen, der die Drehbewegung des jeweiligen Verriegelungselements (4, 5) über die Blockadeposition hinaus blockiert, wobei die Kontur der Ausnehmungen (15, 16) jeweils eine erste Führungsfläche (17, 18) aufweist, welche beim Bewegen des Abdeckelements (3) in die Betriebsposition über den jeweiligen Fortsatz (11, 12) das entsprechende Verriegelungselement (4, 5) gegen den Anschlag (23, 24) drückt, wenn sich das entsprechende Verriegelungselement (4, 5) in der Blockadeposition befindet.

7. Heißgetränkezubereitungsvorrichtung (1) nach einem der Ansprüche 5 und 6, wobei die Kontur der Ausnehmungen (15, 16) jeweils eine zweite Führungsfläche (19, 20) aufweist, welche beim Bewegen des Abdeckelements (3) in die Betriebsposition über den jeweiligen Fortsatz (11, 12) das entsprechende Verriegelungselement (4, 5) in Richtung der verriegelten Position bewegt, wenn sich das entsprechende Verriegelungselement (4, 5) in der entriegelten Position befindet.

8. Heißgetränkezubereitungsvorrichtung (1) nach einem der Ansprüche 5 bis 7, wobei die Kontur der Ausnehmungen (15, 16) jeweils einen Mitnehmerbereich (21, 22) aufweist, welcher den Fortsatz (11, 12) hält, wenn beim Bewegen des Abdeckelements (3) in die Betriebsposition bei Erreichen des Umkehrpunkts des Federelements (9, 10) das jeweilige Verriegelungselement (4, 5) von dem Federelement (9, 10) in die verriegelte Position bewegt wird.

9. Heißgetränkezubereitungsvorrichtung (1) nach einem der vorherigen Ansprüche, mit mindestens einem Schaltelement (25), welches an einem der Verriegelungselemente (4, 5) derart angeordnet ist, dass es von dem Abdeckelement (3) in der Betriebsposition betätigt und in der Serviceposition nicht betätigt wird.

10. Heißgetränkezubereitungsvorrichtung (1) nach einem der obigen Ansprüche, **gekennzeichnet durch** einen Betätiger (34) am Funktionselement (6), der beim Einsetzen des Funktionselements (6) in das Gehäuse (2) das Verriegelungselement (7), das sich in seiner Blockadeposition befindet, durch Anlaufen am Hebelelement (7) in die entriegelte Position bewegt.

11. Heißgetränkezubereitungsvorrichtung (1) nach Anspruch 10, **gekennzeichnet durch** eine federnde Ausbildung des Betätigers (34), so dass er bei einem Einschieben des Funktionselements (6) in die Gehäuseöffnung am Fortsatz (11) des Verriegelungselements (4) in verriegelter Position anläuft, ausweicht und zurückfedernd in seiner Bewegungsrichtung hinter den Fortsatz (11) greift.

## Claims

1. Device for preparing hot beverages (1), in particular coffee machine,
- having a housing (2) which has a movable cover element (3) which has a service position and an operating position and in the service position releases access to a service opening (39) in the housing (2) and blocks access in the operating position,
- having a number of movably mounted locking elements (4, 5) which have at least one unlocked position and one locked position, wherein at least one locking element (4, 5) further has a blocking position and wherein in the blocking position the locking elements (4, 5) are designed to prevent a movement of the cover element (3) into the operating position, in the unlocked position to permit engagement of the cover element (3) and in the locked position to pull the cover element (3) onto the housing (2) with a predetermined force,
- having a function element (6) which can be removed from the housing (2) through the service opening (39) and which when inserted into the housing (2) moves the locking elements (4, 5) having the blocking position into the unlocked position.

2. Device for preparing hot beverages (1) according to claim 1, having a respective lever element (7, 8) at least on those locking elements (4, 5) having the blocking position, wherein the function element (6) is designed, when inserted into the housing (2), to actuate the lever elements (7, 8) such that the corresponding locking elements (4, 5) are moved into the unlocked position.

3. Device for preparing hot beverages (1) according to one of the preceding claims, having a respective bistable spring element (9, 10) with two bias directions for each locking element (4, 5), wherein the spring element (9, 10), in the first bias direction, biases the respective locking element (4, 5) towards the locked position and in a second bias direction biases it towards the unlocked position, wherein the blocking position lies after the unlocked position in the direction of the unlocked position.

4. Device for preparing hot beverages (1) according to claim 3, wherein the reversal point of the bistable spring element (9, 10) lies between the unlocked position and the locked position of the respective locking element (4, 5).

5. Device for preparing hot beverages (1) according to one of the preceding claims, having an extension (11, 12) on each of the locking elements (4, 5) and respectively a corresponding engagement element (13, 14) on the cover element (3) for each of the locking elements (4, 5), wherein the engagement elements (13, 14) each have a recess (15, 16), into which the corresponding extension (11, 12) engages when the cover element (3) is moved into the operating position, when the respective locking element (4, 5) is in the unlocked position.

6. Device for preparing hot beverages (1) according to claim 5, having a stop (23, 24) for each of the locking elements (4, 5) which have the blocking position, and which blocks the rotational movement of the respective locking element (4, 5) beyond the blocking position, wherein the contour of the recesses (15, 16) respectively has a first guide surface (17, 18) which when the cover element (3) is moved into the operating position via the respective extension (11, 12) presses the corresponding locking element (4, 5) against the stop (23, 24) when the corresponding locking element (4, 5) is in the blocking position.

7. Device for preparing hot beverages (1) according to one of claims 5 and 6, wherein the contour of the recesses (15, 16) respectively has a second guide surface (19, 20) which when the cover element (3) is moved into the operating position via the respective extension (11, 12) moves the corresponding locking element (4, 5) towards the locked position when the corresponding locking element (4, 5) is in the unlocked position.

8. Device for preparing hot beverages (1) according to one of claims 5 to 7, wherein the contour of the recesses (15, 16) respectively has a driver area (21, 22) which holds the extension (11, 12), if when the cover element (3) is moved into the operating position upon reaching the reversal point of the spring element (9, 10) the respective locking element (4, 5) is moved by the spring element (9, 10) into the locked position.

9. Device for preparing hot beverages (1) according to one of the preceding claims, having at least one switching element (25) which is arranged on one of the locking elements (4, 5) such that it is actuated by the cover element (3) in the operating position and is not actuated in the service position.

10. Device for preparing hot beverages (1) according to one of the above claims, **characterised by** an actuator (34) on the function element (6), which when the function element (6) is inserted into the housing (2) moves the locking element (7), which is in its blocking position, into the unlocked position by running against the lever element (7).

11. Device for preparing hot beverages (1) according to claim 10, **characterised by** a resilient embodiment of the actuator (34), such that when the function element (6) is inserted into the housing opening said actuator (34) runs against the extension (11) of the locking element (4) in the locked position, sidesteps and resiliently engages in its direction of movement behind the extension (11).

## Revendications

1. Dispositif de préparations de boissons chaudes (1), notamment machine à café entièrement automatique,
- comprenant un boîtier (2) qui présente un élément de recouvrement (3) déplaçable, lequel présente une position de maintenance et une position de fonctionnement, et lequel, dans la position de maintenance, libère l'accès à une ouverture de maintenance (39) dans le boîtier (2) et, dans la position de fonctionnement, bloque l'accès,
- comprenant un nombre d'éléments de verrouillage (4, 5) logés de manière déplaçable, lesquels présentent au moins une position déverrouillée et une position verrouillée, au moins un élément de verrouillage (4, 5) présentant en outre une position de blocage, et les éléments de verrouillage (4, 5) étant réalisés, dans la position de blocage, pour empêcher un mouvement de l'élément de recouvrement (3) en la position de fonctionnement, dans la position déverrouillée, pour permettre une intervention de l'élément de recouvrement (3) et, dans la position verrouillée, pour rapprocher l'élément de recouvrement (3) du boîtier (2) avec une force prédéfinie,
- comprenant un élément fonctionnel (6) pouvant être retiré hors du boîtier (2) à travers l'ouverture de maintenance (39), lequel, lorsqu'il est inséré dans le boîtier (2), déplace les éléments de verrouillage (4, 5), lesquels présentent la position de blocage, en la position déverrouillée.

2. Dispositif de préparations de boissons chaudes (1) selon la revendication 1, comprenant respectivement un élément à levier (7, 8) au moins sur les éléments de verrouillage (4, 5) qui présentent la position de blocage, l'élément fonctionnel (6) étant réalisé, lorsqu'il est inséré dans le boîtier (2), pour actionner les éléments à levier (7, 8) de manière à ce que les éléments de verrouillage (4, 5) correspondants soient déplacés en la position déverrouillée.

3. Dispositif de préparations de boissons chaudes (1) selon l'une quelconque des revendications précédentes, comprenant respectivement un élément à ressort (9, 10) bistable doté de deux directions de précontrainte pour chaque élément de verrouillage (4, 5), l'élément à ressort (9, 10) dans la première direction de précontrainte, préchargeant l'élément de verrouillage (4, 5) respectif en direction de la position verrouillée et, dans une deuxième position de précontrainte, le préchargeant en direction de la position déverrouillée, la position de blocage étant située en direction de la position déverrouillée en aval de la position déverrouillée.

4. Dispositif de préparations de boissons chaudes (1) selon la revendication 3, le point d'inversion de l'élément à ressort (9, 10) bistable étant situé entre la position déverrouillée et la position verrouillée de l'élément de verrouillage (4, 5) respectif.

5. Dispositif de préparations de boissons chaudes (1) selon l'une quelconque des revendications précédentes, comprenant un prolongement (11, 12) sur chacun des éléments de verrouillage (4, 5) et respectivement un élément de prise (13, 14) correspondant sur l'élément de recouvrement (3) pour chacun des éléments de verrouillage (4, 5), les éléments de prise (13, 14) présentant respectivement un évidement (15, 16) dans lequel le prolongement (11, 12) correspondant a prise lors du déplacement de l'élément de recouvrement (3) en la position de fonctionnement lorsque l'élément de verrouillage (4, 5) respectif se trouve dans la position déverrouillée.

6. Dispositif de préparations de boissons chaudes (1) selon la revendication 5, comprenant une butée (23, 24) pour chacun des éléments de verrouillage (4, 5) qui présentent la position de blocage, laquelle butée bloque le mouvement de rotation de l'élément de verrouillage (4, 5) respectif au-delà de la position de blocage, le contour des évidements (15, 16) présentant respectivement une première surface de guidage (17, 18) qui, lors du déplacement de l'élément de recouvrement (3) en la position de fonctionnement au-dessus du prolongement (11, 12) respectif, presse l'élément de verrouillage (4, 5) correspondant contre la butée (23, 24) lorsque l'élément de verrouillage (4, 5) correspondant se trouve dans la position de blocage.

7. Dispositif de préparations de boissons chaudes (1) selon l'une quelconque des revendications 5 et 6, le contour des évidements (15, 16) présentant respectivement une deuxième surface de guidage (19, 20) qui, lors du déplacement de l'élément de recouvrement (3) en la position de fonctionnement au-dessus du prolongement (11, 12) respectif, déplace l'élément de verrouillage (4, 5) correspondant en direction de la position verrouillée lorsque l'élément de verrouillage (4, 5) correspondant se trouve dans la position déverrouillée.

8. Dispositif de préparations de boissons chaudes (1) selon l'une quelconque des revendications 5 à 7, le contour des évidements (15, 16) présentant respectivement une zone d'entraînement (21, 22) laquelle maintient le prolongement (11, 12) lorsque, lors du mouvement de l'élément de recouvrement (3) en la position de fonctionnement au moment de l'obtention du point d'inversion de l'élément à ressort (9, 10), l'élément de verrouillage (4, 5) respectif est déplacé en la position verrouillée par l'élément à ressort (9, 10).

9. Dispositif de préparations de boissons chaudes (1) selon l'une quelconque des revendications précédentes, comprenant au moins un élément de commutation (25) qui est disposé sur l'un des éléments de verrouillage (4, 5) de manière à ce que dans la position de fonctionnement, il soit actionné par l'élément de recouvrement (3) et que, dans la position de maintenance, il ne soit pas actionné.

10. Dispositif de préparations de boissons chaudes (1) selon l'une quelconque des revendications précédentes, **caractérisé par** un actionneur (34) sur l'élément fonctionnel (6), qui, lors de l'insertion de l'élément fonctionnel (6) dans le boîtier (2), déplace l'élément de verrouillage (7), lequel se trouve dans sa position de blocage, en la position déverrouillée en raison du déplacement sur l'élément à levier (7).

11. Dispositif de préparations de boissons chaudes (1) selon la revendication 10, **caractérisé par** une réalisation élastique de l'actionneur (34) de sorte que, lors d'une insertion de l'élément fonctionnel (6) dans l'ouverture de boîtier, il démarre sur le prolongement (11) de l'élément de verrouillage (4) en position verrouillée, dévie et a prise derrière le prolongement (11) par rappel élastique dans sa direction de déplacement.
